# EUROPEAN PATENT SPECIFICATION

(11) **EP 4 335 898 B1**
(45) Date of publication and mention of the grant of the patent: **04.06.2025**
(21) Application number: 23775184.7
(22) Date of filing: 27.02.2023
(51) Int. Cl.: C08K 5/00, C08K 5/3432, C08K 5/11, C08L 67/04

(54) **POLYLACTIDE RESIN COMPOSITION WITH EXCELLENT CRYSTALLINITY, AND PREPARATION METHOD THEREFOR**
POLYLACTIDHARZZUSAMMENSETZUNG MIT AUSGEZEICHNETER KRISTALLINITÄT UND HERSTELLUNGSVERFAHREN DAFÜR
COMPOSITION DE RÉSINE DE POLYLACTIDE AYANT UNE EXCELLENTE CRISTALLINITÉ, ET SON PROCÉDÉ DE PRÉPARATION

(30) Priority: 22.03.2022 KR 20220035552
(43) Date of publication of application: 13.03.2024
(73) Proprietor: LG Chem, Ltd., Yeongdeungpo-gu Seoul 07336 (KR)
(72) Inventor: CHO, Jeong Hun, Daejeon 34122 (KR); AN, Yujin, Daejeon 34122 (KR); SUNG, Minchang, Daejeon 34122 (KR); OH, Wan Kyu, Daejeon 34122 (KR)
(74) Representative: Goddar, Heinz J.
(86) International application number: PCT/KR2023/002703
(87) International publication number: WO 2023/182686

(56) References cited:
- CN-A- 110 564 121
- CN-A- 111 349 325
- JP-A- 2008 115 372
- JP-A- 2011 080 048
- JP-A- 2011 080 048
- JP-A- 2016 011 388
- JP-B2- 4 130 695
- QIU ZHAOBIN ET AL: "Effect of orotic acid on the crystallization kinetics and morphology of biodegradable poly (L-lactide) as an efficient nucleating agent", INDUSTRIAL & ENGINEERING CHEMISTRY RESEARCH, vol. 50, no. 21, 10 October 2011 (2011-10-10), pages 12299 - 12303, XP093095504, ISSN: 0888-5885, Retrieved from the Internet <URL:https://pubs.acs.org/doi/10.1021/ie2019596> DOI: 10.1021/ie2019596
- BIAN, X. ET AL.: "S ynthesis of multi-arm poly (L-lactide) and its modification on linear polylactide", POLYMER BULLETIN, vol. 74, 2017, pages 245 - 262, XP036126097, DOI: 10.1007/s00289-016-1713-4
- QIU ZHAOBIN, LI ZHISHENG: "Effect of orotic acid on the crystallization kinetics and morphology of biodegradable poly (L-lactide) as an efficient nucleating agent", INDUSTRIAL & ENGINEERING CHEMISTRY RESEARCH, AMERICAN CHEMICAL SOCIETY, vol. 50, no. 21, 2 November 2011 (2011-11-02), pages 12299 - 12303, XP093095504, ISSN: 0888-5885, DOI: 10.1021/ie2019596

## Description

### [TECHNICAL FIELD]

The present invention relates to a polylactide resin composition excellent in crystallinity degree.

### [BACKGROUND ART]

Polylactide (or polylactic acid; PLA) resin is prepared based on biomass materials, and is an eco-friendly material which emits less global warming gas carbon dioxide during the production process, and is degraded by a specific temperature and composting facility. In recent years, it has also attracted attention as one of the materials that can replace existing crude oilbased resins as a measure for the upcycling of waste plastics and regulation on carbon emissions.

In addition, the polylactide resin has the advantages of being inexpensive compared to other biodegradable polymers and having high tensile strength and modulus properties.

However, the polylactide resin has a problem that a rigid polymer main chain is repeated in short units, the crystallization rate is slow due to slow chain mobility, and the molding cycle is long, thereby lowering the productivity. Therefore, in order to improve these problems, many studies are being conducted to introduce a material such as a nucleating agent to improve productivity and heat resistance.

In general, the materials used as the nucleating agents are mainly inorganic nucleating agents, and it has been reported that materials such as talc, mica, and nanoclay are used, and some of them are added during PLA molding, thereby capable of improving heat resistance and strength.

However, if such a nucleating agent is added in an excessive amount, there is a problem that the specific gravity of the resin increases and the transparency decreases. On the other hand, as a material that improves the crystallinity degree and transparency, organic nucleating agents such as LAK 301 (aromatic sulfonate derivative), sodium benzoate, N-aminophthalimide, phthalhydrazide, and cadmium phenylmalonate are used. However, these materials are not bio-based materials, and have dispersion problems with PLA resins.

Therefore, there is a need to introduce bio-based organic nucleating agents that can be prepared in eco-friendly products and, at the same time, do not impair transparency. In addition, there is a need to introduce a nucleating agent having less dispersion problems with the polylactide resin to further improve the crystallinity degree of the polylactide resin.

JP 2011080048 A discloses a polylactic acid resin composition comprising high molecular weight polylactic acid with 50 to 99% by weight and a low molecular weight polylactic acid containing a COOH group or ester residue of lactic acid as a nucleating agent.

Industrial & Engineering Chemistry Research, American Chemical Society, vol. 50, No. 21, 12299-12303, discloses an effect of orotic acid on the crystallization kinetics and morphology of biodegradable poly(L-lactide) as a nucleating agent.

JP 4130695 B2 discloses a polylactic acid resin composition comprising a mixture of two nucleating agents.

### [DETAILED DESCRIPTION OF THE INVENTION]

### [Technical Problem]

It is an object of the present disclosure to provide a polylactide resin composition excellent in crystallinity degree by using in combination with a specific nucleating agent.

### [Technical Solution]

In order to achieve the above object, according to the present disclosure, there is provided the following polylactide resin composition:
A polylactide resin composition comprising:
a polylactide resin; a first nucleating agent; and a second nucleating agent,
wherein the first nucleating agent is uracil or orotic acid, and is contained in an amount of 0.5 to 5% by weight based on the total weight of the polylactide resin composition, and
wherein the second nucleating agent is a compound containing a lactide oligomer structure, and is contained in an amount of 3 to 25% by weight based on the total weight of the polylactide resin composition.

As used herein, the term "polylactide resin" is defined to comprehensively refer to a homopolymer or copolymer including a repeating unit represented by the following Chemical Formula.

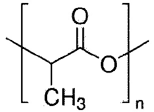

The polylactide resin can be prepared by a process including a step of forming the above repeating unit by the ring opening polymerization of the lactide monomer. The polymer obtained after the completion of such ring opening polymerization and the formation of the repeating unit can be referred to as the "polylactide resin".

At this time, the term "lactide monomer" can be defined as follows. Typically, lactides can be classified into L-lactide consisting of L-lactic acid, D-lactide consisting of D-lactic acid, and meso-lactide consisting of an L-type and a D-type. Also, a mixture of L-lactide and D-lactide in a ratio of 50:50 is referred to as D,L-lactide or rac-lactide. Among these lactides, the polymerization proceeding only with either of L-lactide and D-lactide that have a high level of optical purity is known to yield an L- or D-polylactide (PLLA or PDLA) with a high level of stereoregularity. Such polylactides have a faster crystallization rate and also a higher crystallinity degree than a polylactide having a low level of optical purity. However, the term "lactide monomer" is defined to include all types of lactides regardless of the characteristic differences of lactides depending on their types and the characteristic differences of the polylactide resins obtained therefrom.

Meanwhile, the polylactide resin composition according to the present disclosure has a weight average molecular weight of 70,000 to 400,000 as an example.

The present disclosure is characterized in that the polylactide resin is used in combination of the first nucleating agent and the second nucleating agent to thereby improve the crystallinity degree of the polylactide resin.

The first nucleating agent is uracil or orotic acid. The first nucleating agent is a bio-based organic material, and is added to the polylactide resin, acts as a nucleation site and induces the crystal nucleus generation at high temperature, thereby capable of improving the crystallization rate.

The first nucleating agent is contained in an amount of 0.5 to 5% by weight based on the total weight of the polylactide resin composition. If the content is less than 0.1% by weight, the effect due to the use of the first nucleating agent is insignificant, and if the content exceeds 5% by weight, there is a risk of impairing physical properties inherent in the polylactide resin. More preferably, the first nucleating agent is contained in an amount of 4.5% by weight or less, 4.0% by weight or less, or 3.5% by weight or less.

The second nucleating agent is a nucleating agent containing an oligomer structure of the lactide monomer. Due to the oligomer structure of the lactide monomer, it has high compatibility with the polylactide resin, and is added to the polylactide resin to play a role similar to that of a plasticizer. Thereby, a free volume can be formed in the polylactide resin to thereby enhance the chain mobility of the polylactide resin and increase the crystallinity degree.

Preferably, the second nucleating agent is a compound represented by the following Chemical Formula 1: 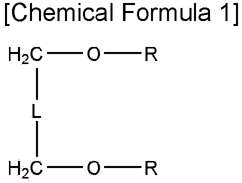 wherein, in Chemical Formula 1,
L is any one selected from the group consisting of: 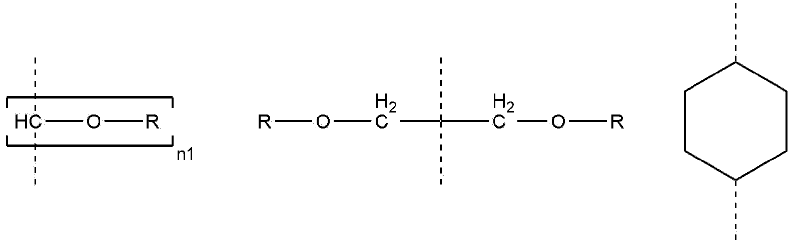 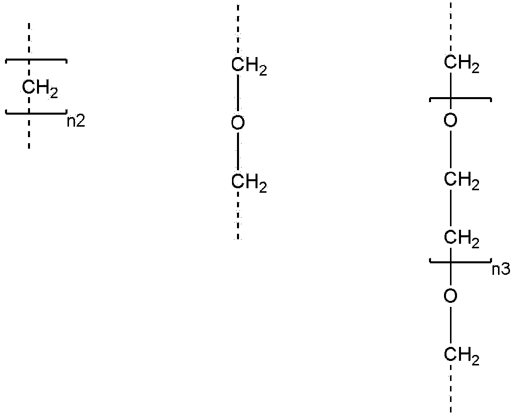 wherein,
n1 is an integer of 1 to 4,
n2 is an integer of 1 to 4,
n3 is an integer of 1 to 30, and
R is a substituent represented by the following Chemical Formula 2, 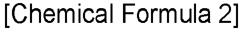 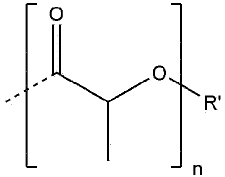
wherein,
n represents the number of repeating units, and
R' is hydrogen or acetyl.

The weight average molecular weight of the second nucleating agent may be adjusted according to the number of each lactide repeating unit. Preferably, the weight average molecular weight of the second nucleating agent is 1,000 to 50,000. More preferably, the weight average molecular weight of the second nucleating agent is 1,100 or more, 1,200 or more, 1,300 or more, 1,400 or more, or 1,500 or more; and 40,000 or less, 30,000 or less, 20,000 or less, 10,000 or less, 9,000 or less, or 8,000 or less.

The second nucleating agent is contained in an amount of 3 to 25% by weight based on the total weight of the polylactide resin composition. If the content is less than 3% by weight, the effect due to the use of the second nucleating agent is insignificant, and if the content exceeds 25% by weight, there is a risk of impairing the physical properties inherent in the polylactide resin. More preferably, the second nucleating agent is contained in an amount of 3.5% by weight or more, 4.0% by weight or more, or 4.5% by weight or more; and 24% by weight or less, 23% by weight or less, 22% by weight or less, or 21% by weight or less.

Meanwhile, the method for preparing the above-mentioned polylactide resin composition is not particularly limited as long as it is a method of mixing the polylactide resin, the first nucleating agent, and the second nucleating agent. In one example, since respective components are well dissolved in a CHCl₃ solvent, the polylactide resin composition can be prepared by a method of dissolving respective components in a CHCl₃ solvent, mixing them, and then removing the solvent.

### [Advantageous Effects]

The above-mentioned polylactide resin composition according to the present disclosure is excellent in crystallinity degree and excellent in dispersibility between components and thus, also is excellent in transparency. Therefore, the polylactide resin composition according to the present disclosure can maintain the properties inherent in the polylactide resin according to the present disclosure while having excellent processability.

### [BRIEF DESCRIPTION OF THE DRAWINGS]

FIG. 1 shows NMR results of the second nucleating agent prepared in Preparation Example 1.
FIGS. 2 to 5 show DSC measurement results for the polylactide resin compositions prepared in Examples and Comparative Examples.

### [DETAILED DESCRIPTION OF THE EMBODIMENTS]

Below, embodiments of the present disclosure will be described in more detail with reference to examples. However, the following examples are for illustrative purposes only and are not intended to limit the scope of the present disclosure.

### Preparation Example 1: Preparation of Second Nucleating Agent (P4-oligomer)

### 1) Preparation of Second Nucleating Agent (P4-O-oligomer)

An oligomer was prepared using PEG-400 (P4) as an initiator. Specifically, lactide and P4 were added in a 20 mL vial at a molar ratio of 4:1, 8:1, 12:1, and 16:1 so that the total was 4.5 g, and Sn(Oct)₂ catalyst was added in amount to be 0.1 to 0.2 wt.%, and then reacted at 130°C for 4 hours. After vacuum drying, the reaction mixture was cooled to room temperature to prepare a second nucleating agent, which was named P4-O-001, P4-O-002, P4-O-003, and P4-O-004, respectively, and the weight average molecular weight is shown in Tables 1 and 2 below.

### 2) Preparation of Second Nucleating Agent (P4-A-oligomer)

An oligomer was prepared using PEG-400 (P4) as an initiator. Specifically, lactide and P4 were added in a 20 mL vial at a molar ratio of 4:1, 8:1, 12:1, and 16:1 so that the total was 4.5 g, and Sn(Oct)₂ catalyst was added in amount to be 0.1 to 0.2 wt.%, and then reacted at 130°C for 4 hours. After adjusting the temperature to 120°C, acetic anhydride (4 equivalents relative to the terminal OH group) was added, and further reacted for 12 hours. After completion of the reaction, acetic acid as a byproduct and residual acetic anhydride were removed by vacuum drying to prepare a second nucleating agent having a structure in which the terminal group was substituted with an acetyl group, which was named P4-A-001, P4-A-002, P4-A-003, and P4-A-004, respectively, and the weight average molecular weights are shown in Tables 1 and 2 below.

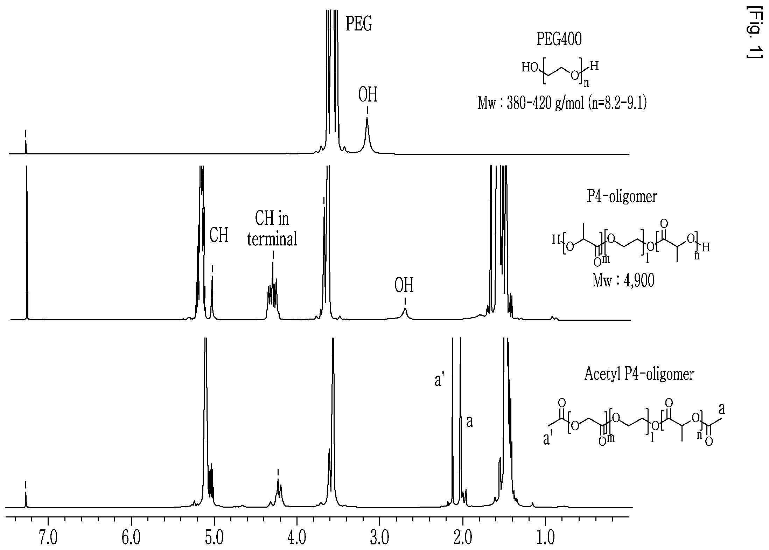

NMR analysis was performed on the prepared second core agent together with PEG-400 as a starting material, and the results are shown in FIG. 1.

As shown in FIG. 1, OH groups (2.5 ppm) or acetyl groups (2.1-2.2 ppm) at both terminal ends of the oligomer were observed.

### Preparation Example 2: Preparation of Second Nucleating Agent (P10-oligomer)

### 1) Preparation of Second Nucleating Agent (P10-O-oligomer)

An oligomer was prepared using PEG-1000 (P10) as an initiator. Specifically, lactide and P10 were added in a 20 mL vial at a molar ratio of 4:1, 8:1, 12:1, and 16:1 so that the total was 4.5 g, and Sn(Oct)₂ catalyst was added in amount to be 0.1 to 0.2 wt.%, and then reacted at 130°C for 4 hours. After vacuum drying, the reaction mixture was cooled to room temperature to prepare a second nucleating agent, which was named P10-O-001, P10-O-002, P10-O-003, and P10-O-004, respectively, and the weight average molecular weight is shown in Tables 1 and 2 below.

### 2) Preparation of Second Nucleating Agent (P10-A-oligomer)

An oligomer was prepared using PEG-1000 (P10) as an initiator. Specifically, lactide and P10 were added in a 20 mL vial at a molar ratio of 4:1, 8:1, 12:1, and 16:1 so that the total was 4.5 g, and Sn(Oct)₂ catalyst was added in an amount to be 0.1 to 0.2 wt.%, and then reacted at 130°C for 4 hours. After adjusting the temperature to 120°C, acetic anhydride (4 equivalents relative to the terminal OH group) was added, and further reacted for 12 hours. After completion of the reaction, acetic acid as a byproduct and residual acetic anhydride were removed by vacuum drying to prepare a second nucleating agent having a structure in which the terminal group was substituted with an acetyl group, which was named P10-A-001, P10-A-002, P10-A-003, P10-A-004, respectively, and the weight average molecular weights are shown in Tables 1 and 2 below.

### Preparation Example 3: Preparation of Second Nucleating Agent (CD-oligomer)

An oligomer was prepared using cyclohexanedimethanol (CD) as an initiator. Specifically, lactide and CD were added in a 20 mL vial at a molar ratio of 4:1, 8:1, 12:1, and 16:1 so that the total was 4.5 g, and Sn(Oct)₂ catalyst was added in amount to be 0.1 to 0.2 wt.%, and then reacted at 130°C for 4 hours. After vacuum drying, the reaction mixture was cooled to room temperature to prepare a second nucleating agent, which were named CD-O-001, CD-O-002, CD-O-003, and CD-O-004, respectively, and the weight average molecular weight is shown in Tables 1 and 2 below.

### Preparation Example 4: Preparation of Second Nucleating Agent (PD-oligomer)

An oligomer was prepared using 1,5-pentanediol (PD) as an initiator. Specifically, lactide and PD were added in a 20 mL vial at a molar ratio of 4:1, 8:1, 12:1, and 16:1 so that the total was 4.5 g, and Sn(Oct)₂ catalyst was added in amount to be 0.1 to 0.2 wt.%, and then reacted at 130°C for 4 hours. After vacuum drying, the reaction mixture was cooled to room temperature to prepare a second nucleating agent, which were named PD-O-001, PD-O-002, PD-O-003, and PD-O-004, respectively, and the weight average molecular weight is shown in Tables 1 and 2 below.

### Preparation Example 5: Preparation of Second Nucleating Agent (DG-oligomer)

An oligomer was prepared using diethylene glycol (DG) as an initiator. Specifically, lactide and DG were added in a 20 mL vial at a molar ratio of 4:1, 8:1, 12:1, and 16:1 so that the total was 4.5 g, and Sn(Oct)₂ catalyst was added in amount to be 0.1 to 0.2 wt.%, and then reacted at 130°C for 4 hours. After vacuum drying, the reaction mixture was cooled to room temperature to prepare a second nucleating agent, which were named DG-O-001, DG-O-002, DG-O-003, and DG-O-004, respectively, and the weight average molecular weight is shown in Tables 1 and 2 below.

### Preparation Example 6: Preparation of Second Nucleating Agent (GL-oligomer)

An oligomer was prepared using glycerol (GL) as an initiator. Specifically, lactide and GL were added in a 20 mL vial at a molar ratio of 6:1, 12:1, and 18:1 so that the total was 4.5 g, and Sn(Oct)₂ catalyst was added in amount to be 0.1 to 0.2 wt.%, and then reacted at 130°C for 4 hours. After vacuum drying, the reaction mixture was cooled to room temperature to prepare a second nucleating agent, which was named GL-O-001, GL-O-002, and GL-O-003, respectively, and the weight average molecular weight is shown in Tables 1 and 2 below.

### Preparation Example 7: Preparation of Second Nucleating Agent (PT-oligomer)

An oligomer was prepared using pentaerythritol (PT) as an initiator. Specifically, lactide and PT were added in a 20 mL vial at a molar ratio of 8:1, 16:1, 24:1, and 32:1 so that the total was 4.5 g, and Sn(Oct)₂ catalyst was added in amount to be 0.1 to 0.2 wt.%, and then reacted at 130°C for 4 hours. After vacuum drying, the reaction mixture was cooled to room temperature to prepare a second nucleating agent, which were named PT-O-001, PT-O-002, PT-O-003, and PT-O-004, respectively, and the weight average molecular weight is shown in Tables 1 and 2 below.

### Preparation Example 8: Preparation of Second Nucleating Agent (SB-oligomer)

An oligomer was prepared using sorbitol (SB) as an initiator. Specifically, lactide and SB were added in a 20 mL vial at a molar ratio of 12:1, 24:1, and 36:1 so that the total was 4.5 g, and Sn(Oct)₂ catalyst was added in amount to be 0.1 to 0.2 wt.%, and then reacted at 130°C for 4 hours. After vacuum drying, the mixture was cooled to room temperature to prepare a second nucleating agent, which were named SB-O-001, SB-O-002, and SB-O-003, respectively, and the weight average molecular weight is shown in Tables 1 and 2 below.

### Example and Comparative Example

300 g of PLA pellet (4032D from NatureWorks; weight average molecular weight of about 200,000) was added to a 500 mL vial, and 12 mL of CHCl₃ was added and completely dissolved. The first nucleating agent and the second nucleating agent shown in Table 1 below were dissolved or evenly dispersed in 4 mL of CHCl₃ according to their contents to prepare a solution, and then mixed into the previously prepared PLA solution. The solution was mixed evenly by sonication for 1 hour and air-dried on an Al dish (diameter: 80 mm) to remove the solvent, and then dried in vacuum at 60°C for 5 hours to prepare PLA films (thickness: about 0.5 mm to 1.0 mm), respectively.

### Experimental Example

The physical properties of the first nucleating agent, second nucleating agent, and PLA film prepared above were measured by the following methods.

### 1) Weight average molecular weight

The number average molecular weight (Mn) and the weight average molecular weight (Mw) were calculated using a GPC (Gel Permeation Chromatography) device, and the oligomer molecular weight distribution (Mw/Mn) was measured, and specific measurement conditions are as follows.
- Column: PLgel Mixed E x 2
- Solvent: THF
- Flow rate: 0.7 mL/min
- Sample concentration: 3.0 mg/mL
- Injection volume: 100 µl
- Column temperature: 40°C
- Detector: Waters 2414 RID
- Standard: PS (Polystyrene)

### 2) DSC (Differential scanning calorimetry)

The PLA film was made into a completely amorphous state, and heated up to 250°C, which is equal to or higher than the melting temperature of PLA, at a heating rate of 10°C/min to eliminate the thermal history, and then stabilized for 5 minutes to make into an amorphous molten state. After that, to analyze ΔHc and crystallization behavior, a crystallization peak was observed while cooling up to -20°C at a cooling rate of 10°C/min. To observe the melting peak after stabilization, re-heating (2^{nd} Run) was performed up to 250°C at a rate of 10°C/min, and ΔHm at the melting peak was confirmed. The crystallinity degree X was calculated using the following Equation (100% crystalline PLA ΔHm = 93 J/g).
- Crystallinity degree in the cooling process: (exothermic peak area in the cooling process, ΔHc) / (100% crystalline PLA ΔHm)
- 2^{nd} Run crystallinity degree: (Area of endothermic peak in 2^{nd} thermogram, ΔHm-cold crystallization exothermic peak area, ΔHcc) / (100% crystalline PLA ΔHm) * 100

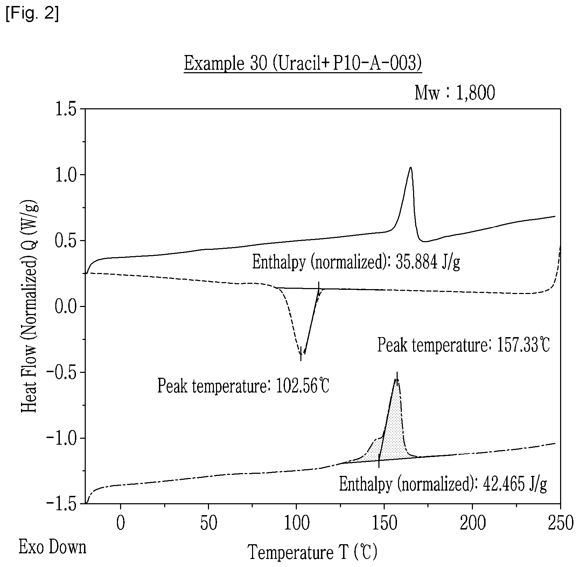

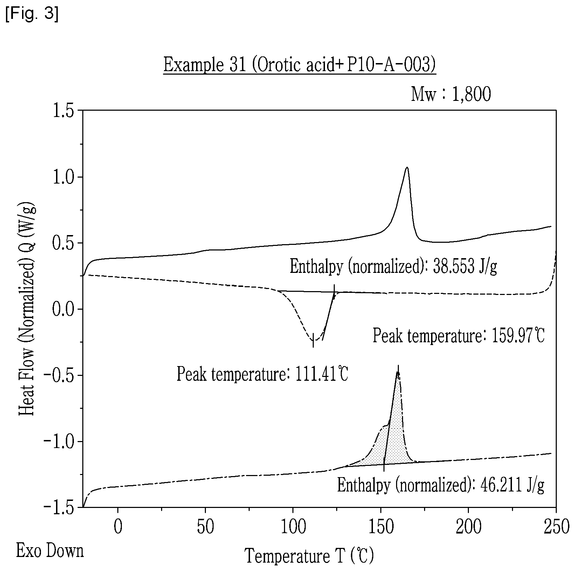

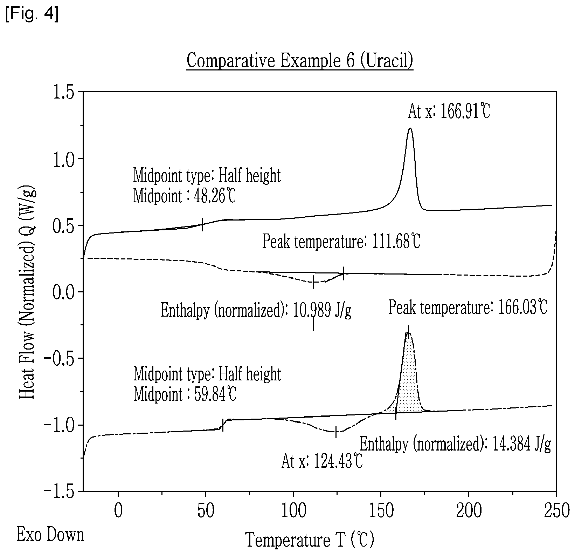

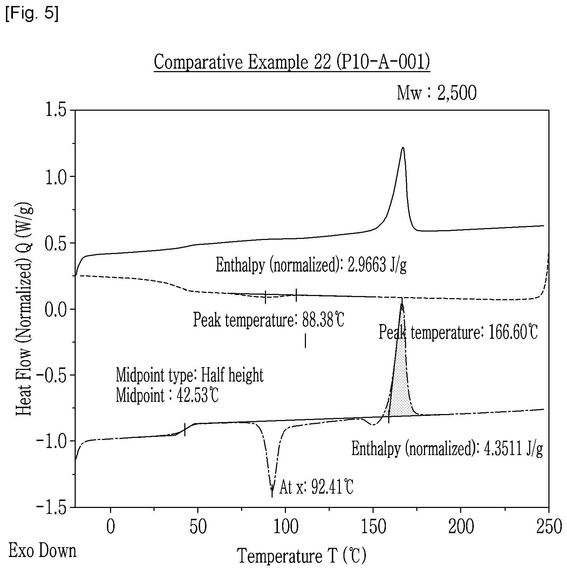

The results are shown in Tables 1 and 2 below, and some of the DSC measurement results are shown in FIGS. 2 to 5. Meanwhile, in Tables 1 and 2 below, each abbreviation has the following meaning.

D-SB (D-sorbitol), PT (pentaerythritol), OA (orotic acid), L-PA (L-phenylalanine), PH (phthalhydrazide)

**[Table 1]**

| Item | 1^{st} nucleating agent | | 2^{nd} nucleating agent | | | DSC (cooling) | | DSC (2^{nd} temperature rising) | | | |
|---|---|---|---|---|---|---|---|---|---|---|---|
| | Type | wt.% | Type | Mw | wt.% | Tc (°C) | Xc (%) | Tg (°C) | Tcc (°C) | Tm (°C) | Xc (%) |
| Ex. 1 | Uracil | 1 | CD-O-001 | 1,200 | 10 | 112.3 | 5.1 | 50.3 | 101.9 | 165.2 | 5.7 |
| Ex. 2 | Uracil | 1 | PD-O-001 | 1,200 | 10 | 111.2 | 5.1 | 48.4 | 99.0 | 164.5 | 9.7 |
| Ex. 3 | Uracil | 1 | PD-O-001 | 1,200 | 20 | 102.8 | 30.5 | 31.4 | 83.2 | 153.6 | 39.3 |
| Ex. 4 | Uracil | 1 | DG-O-001 | 1,200 | 10 | 112.6 | 5.7 | 50.2 | 101.2 | 164.6 | 6.8 |
| Ex. 5 | Uracil | 1 | DG-O-001 | 1,200 | 20 | 99.6 | 20.2 | 36.0 | 88.9 | 154.4 | 22.1 |
| Ex. 6 | Uracil | 1 | P4-O-001 | 1,600 | 10 | 115.1 | 12.3 | 44.9 | 92.0 | 165.4 | 19.6 |
| Ex. 7 | Uracil | 1 | P4-O-001 | 1,600 | 20 | 102.0 | 34.0 | 37.0 | 77.5 | 162.9 | 54.6 |
| Ex. 8 | Uracil | 1 | P10-O-001 | 2,500 | 10 | 103.7 | 16.0 | 43.8 | 88.0 | 166.4 | 25.4 |
| Ex. 9 | Uracil | 1 | P10-O-001 | 2,500 | 20 | 103.7 | 38.6 | - | - | 164.3 | 52.6 |
| Ex. 10 | OA | 1 | CD-O-001 | 1,200 | 10 | 100.8 | 4.9 | 52.7 | 109.0 | 166.8 | 8.2 |
| Ex. 11 | OA | 1 | PD-O-001 | 1,200 | 10 | 101.4 | 16.0 | 50.7 | 104.7 | 166.9 | 27.2 |
| Ex. 12 | OA | 1 | DG-O-001 | 1,200 | 10 | 102.2 | 13.9 | 47.0 | 101.0 | 165.7 | 23.2 |
| Ex. 13 | OA | 1 | P4-O-001 | 1,600 | 10 | 100.7 | 22.9 | 45.9 | 95.6 | 166.4 | 39.0 |
| Ex. 14 | OA | 1 | P10-O-001 | 2,500 | 10 | 96.9 | 24.2 | 42.4 | 87.3 | 166.9 | 41.4 |
| Ex. 15 | Uracil | 3 | P4-A-001 | 1,600 | 10 | 112.2 | 20.2 | 46.0 | 98.4 | 165.7 | 25.7 |
| Ex. 16 | OA | 3 | P4-A-001 | 1,600 | 10 | 98.3 | 11.4 | 47.0 | 100.6 | 167.0 | 17.4 |
| Ex. 17 | Uracil | 3 | P4-A-002 | 5,100 | 10 | 112.3 | 19.1 | 55.0 | 109.2 | 167.4 | 25.0 |
| Ex. 18 | OA | 3 | P4-A-002 | 5,100 | 10 | 103.4 | 7.2 | 55.3 | 110.1 | 168.2 | 11.2 |
| Ex. 19 | Uracil | 3 | P4-A-003 | 800 | 10 | 105.6 | 43.4 | - | - | 157.3 | 52.4 |
| Ex. 20 | OA | 3 | P4-A-003 | 800 | 10 | 107.7 | 45.0 | - | - | 158.1 | 52.4 |
| Ex. 21 | Uracil | 3 | P4-A-004 | 1,000 | 10 | 111.6 | 37.9 | - | - | 162.2 | 47.9 |
| Ex. 22 | OA | 3 | P4-A-004 | 1,000 | 10 | 96.7 | 38.3 | - | - | 159.5 | 46.4 |
| Ex. 23 | Uracil | 3 | P10-A-001 | 2,500 | 5 | 115.0 | 44.5 | - | - | 162.8 | 51.9 |
| Ex. 24 | Uracil | 1 | P10-A-001 | 2,500 | 10 | 109.8 | 47.3 | - | - | 160.6 | 55.1 |
| Ex. 25 | OA | 1 | P10-A-001 | 2,500 | 10 | 95.0 | 39.2 | - | - | 160.1 | 54.4 |
| Ex. 26 | Uracil | 3 | P10-A-001 | 2,500 | 10 | 117.8 | 27.5 | 43.3 | 92.6 | 166.7 | 37.8 |
| Ex. 27 | OA | 3 | P10-A-001 | 2,500 | 10 | 98.6 | 21.7 | 43.7 | 94.3 | 167.5 | 35.3 |
| Ex. 28 | Uracil | 3 | P10-A-002 | 6,000 | 10 | 116.1 | 27.2 | 52.2 | 106.2 | 167.3 | 35.2 |
| Ex. 29 | OA | 3 | P10-A-002 | 6,000 | 10 | 100.7 | 12.2 | 53.2 | 105.7 | 168.2 | 18.3 |
| Ex. 30 | Uracil | 3 | P10-A-003 | 1,800 | 10 | 106.2 | 45.5 | - | - | 157.7 | 53.3 |
| Ex. 31 | OA | 3 | P10-A-003 | 1,800 | 10 | 112.5 | 48.6 | - | - | 159.9 | 56.8 |
| Ex. 32 | Uracil | 3 | P10-A-004 | 2,000 | 10 | 104.3 | 44.8 | - | - | 157.5 | 54.3 |
| Ex. 33 | OA | 3 | P10-A-004 | 2,000 | 10 | 100.2 | 42.9 | - | - | 159.2 | 54.6 |

**[Table 2]**

| Item | 1^{st} nucleating agent | | 2^{nd} nucleating agent | | | DSC(cooling) | | DSC(2^{nd} temperature rising) | | | |
|---|---|---|---|---|---|---|---|---|---|---|---|
| | Type | wt.% | Type | Mw | wt.% | Tc(°C) | Xc(%) | Tg(°C) | Tcc(°C) | Tm(°C) | Xc(%) |
| Com. Ex. 1 | - | - | - | - | - | 95.1 | 0.2 | 60.1 | 124.1 | 165.4 | 3.4 |
| Com. Ex. 2 | Talc | 3 | - | - | - | 98.7 | 3.7 | 50.3 | 118.6 | 165.9 | 7.6 |
| Com. Ex. 3 | Talc | 10 | - | - | - | 101.7 | 12.3 | 59.3 | 110.0 | 166.5 | 19.1 |
| Com. Ex. 4 | D-SB | 3 | - | - | - | 92.4 | 0.6 | 57.3 | 116.8 | 163.5 | 1.7 |
| Com. Ex. 5 | PT | 3 | - | - | - | 91.8 | 0.4 | 57.5 | 116.1 | 166.8 | 0.3 |
| Com. Ex. 6 | Uracil | 3 | - | - | - | 111.7 | 11.5 | 59.8 | 123.2 | 165.9 | 15.1 |
| Com. Ex. 7 | OA | 3 | - | - | - | 109.8 | 3.0 | 50.9 | 127.0 | 166.6 | 4.5 |
| Com. Ex. 8 | L-PA | 3 | - | - | - | 92.9 | 1.1 | 59.0 | 122.3 | 165.5 | 4.4 |
| Com. Ex. 9 | PH | 3 | - | - | - | 102.8 | 2.7 | 58.3 | 113.9 | 164.2 | 5.7 |
| Com. Ex. 10 | - | - | GL-O-001 | 1,700 | 10 | 90.5 | 0.8 | 54.4 | 119.1 | 166.8 | 2.0 |
| Com. Ex. 11 | - | - | GL-O-002 | 3,800 | 10 | 91.4 | 0.8 | 55.9 | 118.4 | 167.5 | 1.9 |
| Com. Ex. 12 | - | - | GL-O-003 | 5,400 | 10 | 91.1 | 0.5 | 56.9 | 123.1 | 168.1 | 1.6 |
| Com. Ex. 13 | - | - | PT-O-001 | 2,100 | 20 | 83.5 | 2.3 | 42.9 | 98.5 | 157.8 | 3.5 |
| Com. Ex. 14 | - | - | SB-O-001 | 2,800 | 20 | 86.4 | 0.2 | 47.4 | 107.1 | 159.5 | 0.7 |
| Com. Ex. 15 | - | - | CD-O-001 | 1,200 | 20 | 85.3 | 2.6 | 38.7 | 89.7 | 155.6 | 3.9 |
| Com. Ex. 16 | - | - | PD-O-001 | 1,200 | 20 | 87.3 | 5.4 | 35.0 | 83.6 | 154.5 | 13.9 |
| Com. Ex. 17 | - | - | DG-O-001 | 1,200 | 20 | 87.4 | 3.1 | 39.5 | 90.3 | 154.8 | 9.3 |
| Com. Ex. 18 | - | - | P4-O-001 | 1,600 | 20 | 82.7 | 16.9 | 32.0 | 79.4 | 162.9 | 31.9 |
| Com. Ex. 19 | - | - | P10-O-001 | 2,500 | 20 | 85.7 | 30.7 | - | - | 164.6 | 52.3 |
| Com. Ex. 20 | - | - | P4-A-001 | 1,600 | 10 | - | - | 47.5 | 100.5 | 166.0 | 0.8 |
| Com. Ex. 21 | - | - | P4-A-002 | 5,100 | 10 | - | - | 55.5 | 111.1 | 167.7 | 0.3 |
| Com. Ex. 22 | - | - | P10-A-001 | 2,500 | 10 | 88.8 | 3.0 | 42.9 | 93.2 | 1666.8 | 4.1 |
| Com. Ex. 23 | - | - | P10-A-002 | 6,000 | 10 | - | - | 52.7 | 106.2 | 167.8 | 0.2 |
| Com. Ex. 24 | Talc | 1 | GL-O-001 | 1,700 | 10 | 91.8 | 11.3 | 52.0 | 101.8 | 163.1 | 18.4 |
| Com. Ex. 25 | Talc | 1 | PT-O-001 | 2,100 | 10 | 91.6 | 9.8 | 50.6 | 101.4 | 159.5 | 15.3 |
| Com. Ex. 26 | Talc | 1 | SB-O-001 | 2,800 | 10 | 90.1 | 1.0 | 49.2 | 107.1 | 152.0 | 2.4 |
| Com. Ex. 27 | Talc | 1 | CD-O-001 | 1,200 | 10 | 88.9 | 12.9 | 48.7 | 99.6 | 159.5 | 21.3 |
| Com. Ex. 28 | Talc | 1 | PD-O-001 | 1,200 | 10 | 89.5 | 20.6 | 44.4 | 93.7 | 160.7 | 34.5 |
| Com. Ex. 29 | Talc | 1 | DG-O-001 | 1,200 | 10 | 90.2 | 15.9 | 47.4 | 97.0 | 162.4 | 28.1 |
| Com. Ex. 30 | Talc | 1 | P4-O-001 | 1,600 | 10 | 100.3 | 37.5 | 41.8 | - | 164.8 | 48.8 |
| Com. Ex. 31 | Talc | 1 | P10-O-001 | 2500 | 10 | 94.3 | 29.1 | - | - | 164.9 | 43.2 |

As shown in Tables 1 and 2, it was confirmed that in the case of Examples where the first nucleating agent and the second nucleating agent were used simultaneously according to the present disclosure, the crystallization temperature and crystallinity degree were also improved even with a small content.

On the other hand, when the nucleating agent was not used (Comparative Example 1) or when only the first nucleating agent was used (Comparative Examples 2 to 9) and when only the second nucleating agent was used (Comparative Examples 10 to 23), the crystallinity degree was low, and when a second nuclear agent was used but Talc was used as the first nucleating agent (Comparative Examples 24 to 36), the crystallization temperature was low.

## Claims

1. A polylactide resin composition comprising:
a polylactide resin; a first nucleating agent; and a second nucleating agent,
wherein the first nucleating agent is uracil or orotic acid, and is contained in an amount of 0.5 to 5% by weight based on the total weight of the polylactide resin composition, and
wherein the second nucleating agent is a compound containing a lactide oligomer structure, and is contained in an amount of 3 to 25% by weight based on the total weight of the polylactide resin composition.

2. The polylactide resin composition of claim 1, wherein:
a weight average molecular weight of the polylactide resin is 70,000 to 400,000, wherein the weight average molecular weight is measured as disclosed in the specification.

3. The polylactide resin composition of claim 1, wherein:
the first nucleating agent is contained in an amount of 0.5 to 3.5% by weight based on the total weight of the polylactide resin composition.

4. The polylactide resin composition of claim 1, wherein:
the second nucleating agent is a compound represented by the following Chemical Formula 1: 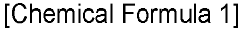 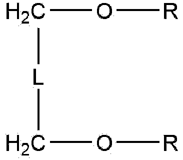 wherein, in Chemical Formula 1,
L is any one selected from the group consisting of: 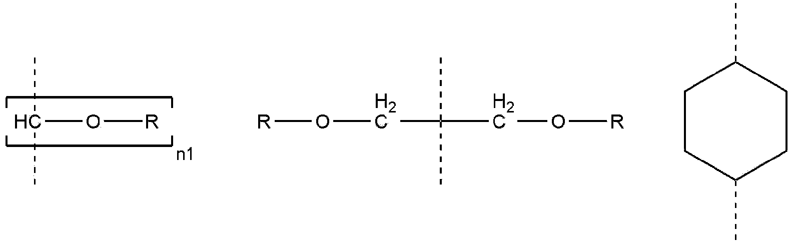 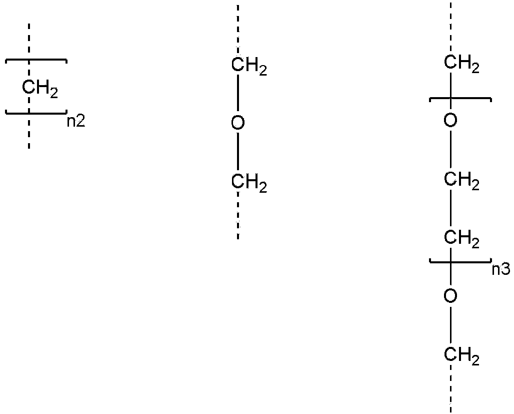 wherein,
n1 is an integer of 1 to 4,
n2 is an integer of 1 to 4,
n3 is an integer of 1 to 30, and
R is a substituent represented by the following Chemical Formula 2, 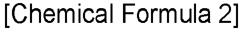 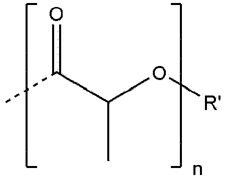
wherein,
n represents the number of repeating units, and
R' is hydrogen or acetyl.

5. The polylactide resin composition of claim 1, wherein:
a weight average molecular weight of the second nucleating agent is 1,000 to 50,000, wherein the weight average molecular weight is measured as disclosed in the specification.

6. The polylactide resin composition of claim 1, wherein:
the second nucleating agent is contained in an amount of 4.5 to 21 % by weight based on the total weight of the polylactide resin composition.

## Patentansprüche

1. Polylactidharzzusammensetzung, umfassend:
ein Polylactidharz; ein erstes Nukleierungsmittel; und ein zweites Nukleierungsmittel,
wobei das erste Nukleierungsmittel Uracil oder Orotsäure ist und in einer Menge von 0,5 bis 5 Gew.-%, bezogen auf das Gesamtgewicht der Polylactidharzzusammensetzung, enthalten ist, und
wobei das zweite Nukleierungsmittel eine Verbindung ist, die eine Lactidoligomerstruktur enthält, und in einer Menge von 3 bis 25 Gew.-%, bezogen auf das Gesamtgewicht der Polylactidharzzusammensetzung, enthalten ist.

2. Polylactidharzzusammensetzung nach Anspruch 1, wobei:
ein gewichtsmittleres Molekulargewicht des Polylactidharzes 70.000 bis 400.000 beträgt, wobei das gewichtsmittlere Molekulargewicht wie in der Beschreibung offenbart gemessen wird.

3. Polylactidharzzusammensetzung nach Anspruch 1, wobei:
das erste Nukleierungsmittel in einer Menge von 0,5 bis 3,5 Gew.-%, bezogen auf das Gesamtgewicht der Polylactidharzzusammensetzung, enthalten ist.

4. Polylactidharzzusammensetzung nach Anspruch 1, wobei:
das zweite Nukleierungsmittel eine durch die folgende chemische Formel 1 dargestellte Verbindung ist: 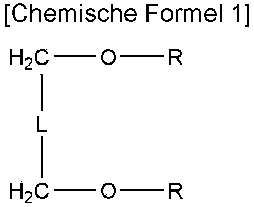 wobei in der chemischen Formel 1
L eines ist, ausgewählt aus der Gruppe, bestehend aus: 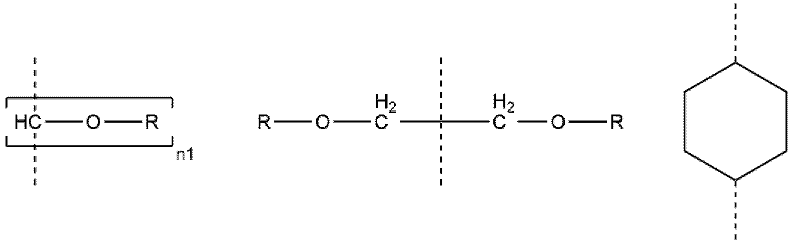 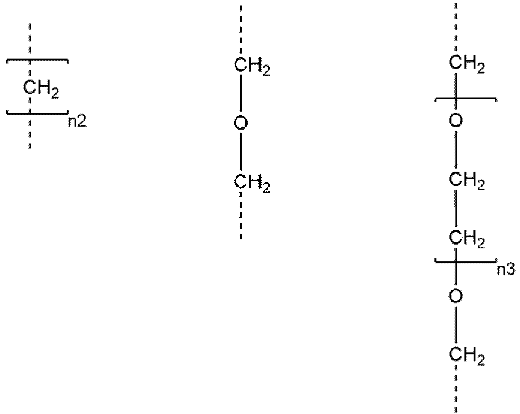 wobei
n1 eine ganze Zahl von 1 bis 4 ist,
n2 eine ganze Zahl von 1 bis 4 ist,
n3 eine ganze Zahl von 1 bis 30 ist, und
R ein durch die folgende chemische Formel 2 dargestellter Substituent ist, 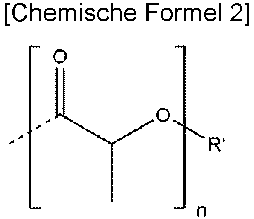
wobei
n die Anzahl der Wiederholungseinheiten darstellt, und
R' Wasserstoff oder Acetyl ist.

5. Polylactidharzzusammensetzung nach Anspruch 1, wobei:
ein gewichtsmittleres Molekulargewicht des zweiten Nukleierungsmittels 1.000 bis 50.000 beträgt, wobei das gewichtsmittlere Molekulargewicht wie in der Beschreibung offenbart gemessen wird.

6. Polylactidharzzusammensetzung nach Anspruch 1, wobei:
das zweite Nukleierungsmittel in einer Menge von 4,5 bis 21 Gew.-%, bezogen auf das Gesamtgewicht der Polylactidharzzusammensetzung, enthalten ist.

## Revendications

1. Composition de résine de polylactide comprenant :
une résine polylactide; un premier agent nucléant; et un second agent nucléant,
dans lequel le premier agent nucléant est l'uracile ou l'acide orotique, et est contenu dans une quantité de 0,5 à 5 % en poids par rapport au poids total de la composition de résine polylactide, et
dans lequel le deuxième agent de nucléation est un composé contenant une structure d'oligomère lactide, et est contenu dans une quantité de 3 à 25% en poids par rapport au poids total de la composition de résine polylactide.

2. Composition de résine polylactide de la revendication 1, dans laquelle :
la masse moléculaire moyenne en poids de la résine polylactide est 70.000 à 400.000, la masse moléculaire moyenne en poids étant mesurée comme indiqué dans la spécification.

3. Composition de résine polylactide de la revendication 1, dans laquelle :
le premier agent nucléant est contenu dans une quantité de 0,5 à 3,5 % en poids par rapport au poids total de la composition de résine polylactide.

4. Composition de résine polylactide de la revendication 1, dans laquelle :
le second agent nucléant est un composé représenté par la formule chimique 1 suivante : 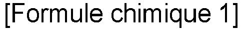 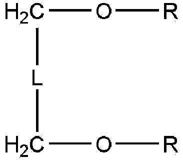 dans laquelle, dans la formule chimique 1,
L est l'un quelconque choisi dans le groupe constitué par: 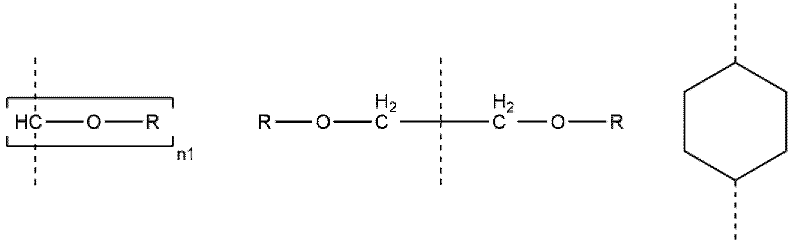 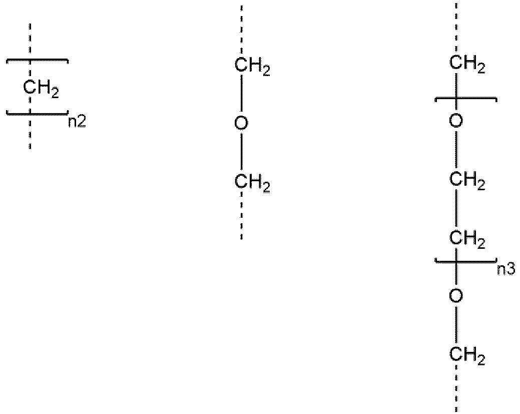 dans lequel,
n1 est un nombre entier de 1 à 4,
n2 est un nombre entier de 1 à 4,
n3 est un nombre entier de 1 à 30, et
R est un substituant représenté par la formule chimique suivante 2, 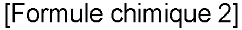 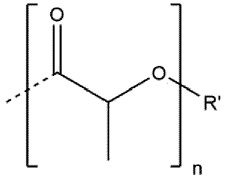
dans lequel,
n représente le nombre d'unités répétitives, et
R' est un hydrogène ou un acétyle.

5. Composition de résine polylactide de la revendication 1, dans laquelle :
la masse moléculaire moyenne en poids du second agent de nucléation est 1.000 à 50.000, la masse moléculaire moyenne en poids étant mesurée comme indiqué dans la spécification.

6. Composition de résine polylactide de la revendication 1, dans laquelle :
le second agent nucléant est contenu dans une quantité de 4,5 à 21% en poids par rapport au poids total de la composition de résine polylactide.
